Europäisches Patentamt

European Patent Office

Office européen des brevets

(11) Veröffentlichungsnummer: **0 193 888**
**B1**

# EUROPÄISCHE PATENTSCHRIFT

(45) Veröffentlichungstag der Patentschrift:
10.10.90

(51) Int. Cl.⁵: **B60J 7/06**

(21) Anmeldenummer: 86102612.8

(22) Anmeldetag: 28.02.86

(54) Schiebeverdeckgestell für Lastkraftwagen.

(30) Priorität: 02.03.85 DE 3507495
30.01.86 DE 3602697

(43) Veröffentlichungstag der Anmeldung:
10.09.86 Patentblatt 86/37

(45) Bekanntmachung des Hinweises auf die Patenterteilung:
10.10.90 Patentblatt 90/41

(84) Benannte Vertragsstaaten:
AT BE CH DE FR IT LI LU NL

(56) Entgegenhaltungen:
DE-A- 1 958 134
FR-A- 83 022
GB-A- 1 545 196

**Die Akte enthält technische Angaben, die nach dem Eingang der Anmeldung eingereicht wurden und die nicht in dieser Patentschrift enthalten sind.**

(73) Patentinhaber: SKF Saarbrücker Karosserie-Fabrik GmbH, Eschberger Weg 11, D-6600 Saarbrücken(DE)

(72) Erfinder: Kirsch, Manfred W., Rothenbühler Weg 38, D-6600 Saarbrücken(DE)

(74) Vertreter: Bernhardt, Winfrid, Dr.-Ing., Kobenhüttenweg 43, D-6600 Saarbrücken(DE)

ACTORUM AG

**Beschreibung**

Die Erfindung betrifft ein Schiebeverdeckgestell für Lastkraftwagen, das eine Anzahl von Spriegeln aufweist, die an zwei an den beiden Seiten verlaufenden Führungen auf Gleitschienen verschiebbar abgestützt sind und durch seitliche, mit mindestens 1/2 cm Zwischenraum gegen die Führung gerichtete Anschläge gesichert sind.

Diese Art Schiebeverdeckgestell ist aus der GB-A 1 545 196 bekannt. Nach dem bekannten Vorschlag sind die Spriegel endseitig mit Gleitschuhen versehen, die auf den Schienen abgestützt sind und zugleich die genannten Anschläge bilden, wofür die Führung als Gegenstück eine am Außenrand der Gleitschienenoberfläche mit dem genannten Zwischenraum zu den Anschlägen sich erhebende Abschlußschiene aufweist. Die beiden solchermaßen die Spriegel einfassenden Abschlußschienen bilden eine Sicherung. Primär sind die Spriegel geführt durch ein stationäres, gespanntes Führungsseil, auf dem die Spriegel mit Hülsen verschiebbar sitzen.

Kommt es beim Verschieben der Spriegel auf einer Seite zu einer Verklemmung, etwa durch ein in eine der Hülsen eingeklemmtes dickeres Schmutzteil, zieht sich der Spriegel schräg. Es besteht dann grundsätzlich die Gefahr, daß der Spriegel von der Gleitschiene abrutscht; das Führungsseil kann dies mit seiner Spannung nicht sicher verhindern.

Weitgehend in Gebrauch sind zwei andere Bauarten.

Die eine Bauart kennzeichnet sich durch bogenförmige, an den Seiten nach unten umgewinkelte Spriegel, die an ihren Enden Fahrwerke aufweisen, mit denen sie in Führungen von der Form nicht ganz geschlossener Kastenprofile sitzen. Die Anschläge sind Anschlagrollen mit senkrechter Achse.

Bei der anderen Bauart sind leicht gewinkelte Spriegel über durch Scheren verbundene Wagen auf aus Doppel-T-Profilen bestehenden Führungen abgestützt.

Beide Schiebeverdeckgestelle sind einer gewissen Wartung bedürftig, Vernachlässigung führt zu Verklemmungen.

Der Erfindung liegt die Aufgabe zugrunde, ein sicheres, einfaches und robustes Schiebeverdeckgestell ohne Neigung zu Verklemmungen zu schaffen.

Gemäß der Erfindung wird dieser Zweck durch ein Schiebeverdeckgestell der eingangs bezeichneten Art erfüllt, bei dem die Anschläge von außen nach innen gerichtet sind und die Spriegel lose, mit Spiel in dem Zwischenraum aufliegen.

Die Umkehr der Wirkungsrichtung der Anschläge gegenüber der Lösung nach der GB-A 1 545 196 hält die Spriegel auf jeden Fall sicher auf den Gleitschienen. Sie erlaubt, auf die gespannten Führungsseile zu verzichten. Damit wird auch die Gefahr von Verklemmungen vermindert.

Verklemmungen könnten nur noch in der Weise auftreten, daß an beiden Seiten die Anschläge fest angedrückt und blockiert sind.

Alle Störungen, die bei den anderen Konstruktionen durch Verkanten der Fahrwerke bzw. der Wagen in waagerechter oder senkrechter Ebene oder auch durch Einklemmen von Schmutzteilen entstehen können, fallen fort.

Darüber hinaus wird aber die erwähnte einzige im Prinzip noch mögliche Verklemmung bedeutend gemildert. Das bei dem lediglich aufgelegten Spriegel mögliche große seitliche Spiel erlaubt es dem Spriegel, sich verhältnismäßig weit schrägzustellen, wenn bei seiner Verschiebung auf der einen Seite ein Widerstand auftritt.

Kommen an beiden Seiten des Spriegels die Anschläge zur Anlage und entsteht dadurch Zug in dem Spriegel und dadurch Anpressung des Anschlags, die die Verklemmung weiter vergrößern kann, so ist diese Anpressung umso geringer, je größer der zwischen dem Spriegel und der Senkrechten auf die Führung gebildete Winkel ist.

Vorzugsweise beträgt das Spiel mehr als 1 cm, besser mehr als 2 cm.

Die Anpressung ist so gering, daß die Anschläge nicht einmal Anschlagrollen zu sein brauchen, wie nach der Prioritätsanmeldung DE-A 35 07 495.7 vorgesehen. Es erweist sich, daß auch mit gleitenden Anschlägen, z.B. in Form runder Stifte, keine störende Verklemmung auftritt.

Die Spriegel sind vorzugsweise gerade oder leicht giebelförmig gewinkelte oder gebogene Stangen aus flachem Vierkantrohr. Dieses hat keine Neigung zu kippen und hält damit die Anschläge sicher in der vorgesehenen Ausrichtung.

Um sicherzustellen, daß die Spriegel nicht aus ihrer Führung heraus springen können, kann über den Gleitschienen jeweils eine Sicherungsschiene angeordnet sein. Stattdessen können die Spriegel auch mit Sicherungshaken unter die Gleitschiene greifen.

Im Falle der Sicherungsschienen können die Anschläge auch oder allein gegen diese gerichtet sein. In der Regel wird man sie jedenfalls gegen die Gleitschienen richten.

So kennzeichnet sich eine erste konkretere Ausgestaltung der Erfindung dadurch, daß die Gleitschienen und die Sicherungsschienen aus Vierkantrohr bestehen und ihre äußeren Seitenflächen die Gegenflächen für jeweils in Flucht miteinander an den beiden Enden der Spriegel angeordnete Anschlagrollen bilden, eine obere und eine untere.

Damit ergeben sich im Falle des Anschlags gleichmäßige Belastungsverhältnisse.

Als eine vorteilhafte weitere Ausgestaltung der Erfindung wird vorgeschlagen, daß die beiden Führungen durch die Spriegelenden einfassende U-Profile gebildet sind, die jeweils einen waagerechten oberen Schenkel, an dem die Sicherungsschiene angeordnet ist, einen senkrechten Rücken und einen schrägen unteren Schenkel aufweisen, auf dem die Gleitschiene über Konsolen oder andere Stützen abgestützt ist.

Diese Konstruktion erreicht mit einfachen Mitteln genügend Festigkeit, bringt die Spriegelenden mit den Anschlagrollen geschützt unter und bleibt durch den schrägen unteren Schenkel des U-Profils, auf dem Wasser abfließen und Feststoff abrutschen kann, weitgehend schmutzfrei.

Eine besonders vorteilhafte Ausgestaltung der Erfindung sieht unter Ausnutzung der erwähnten, unter die Gleitschiene greifenden Sicherungshaken vor, daß die beiden Führungen durch von den Spriegelenden überdeckte Winkelprofile gebildet sind, an deren einen, nach innen gerichteten Schenkeln die Gleitschienen, nach oben überstehend und vorzugsweise unten bündig, sitzen.

Dies erlaubt, die Plane des Schiebeverdecks an den Längsseiten nach unten herumzuwinkeln und damit Regenwasser nach außen abfließen zu lassen.

Mit seiner einfachen Lagerung ist das neue Schiebeverdeckgestell besonders geeignet für einen Zugseiltrieb. Das Zuseil kann darin sehr einfach und störungsfrei geführt werden.

Als besonders vorteilhaft wird vorgeschlagen, dafür bereits vorhandene Mittel zu nutzen, nämlich das Zugseil mit einem Trum durch Durchlässe an den Enden der Spriegel, vorzugsweise ferner mit einem anderen Trum durch die, rohrförmigen, Gleitschienen oder Sicherungsschienen, zu führen und der erste Spriegel an dem Zugseil und die übrigen Spriegel an der Plane des Schiebeverdecks zu befestigen.

Die Zeichnung gibt Ausführungsbeispiele der Erfindung wieder.

Fig. 1 zeigt in vereinfachter Darstellung ein Schiebeverdeckgestell in Draufsicht,
Fig. 2 zeigt in größerem Maßstab einen Schnitt nach Linie II-II in Fig. 2,
Fig. 3 zeigt in einem Fig. 2 entsprechenden Schnitt ein zweites Schiebeverdeckgestell,
Fig. 4 zeigt in einem Fig. 2 entsprechenden Schnitt ein drittes Schiebeverdeckgestell.

Ein Schiebeverdeckgestell, das in an sich bekannter Weise über der Ladefläche eines Lastkraftwagens anzubringen ist, weist zwei seitliche Führungen 1 auf, zwischen denen sich Spriegel 2 erstrecken.

Die Führungen 1 sind wie folgt ausgebildet:

Ein U-Profil 3 weist einen waagerechten oberen Schenkel 4 auf, einen senkrechten Rücken 5 und einen schrägen unteren Schenkel 6. Der untere Schenkel 6 trägt auf Konsolen 7 eine Gleitschiene 8 in Form eines Vierkantrohres von quadratischem Querschnitt. In Flucht mit der Gleitschiene 8 ist an dem oberen Schenkel 4 eine Sicherungsschiene 9 von gleichen Abmessungen wie die Gleitschiene 8 angebracht. Bei 10 ist eine Stütze angedeutet.

Die Spriegel 2 bestehen aus Vierkantrohr von flachem Querschnitt. Sie sind beispielsweise 2 cm hoch und 5 cm breit. Ihre Länge ist im wesentlichen gleich der Breite der Ladefläche.

An ihren Enden weisen die Spriegel 2 senkrecht angesetzte Vierkantrohrabschnitte 11 auf etwa von einer Länge, die mit der Breite der Spriegel übereinstimmt. An den Vierkantrohrabschnitten 11 sitzen auf fluchtenden, senkrechten Achsen 12 zwei Anschlagrollen 13.

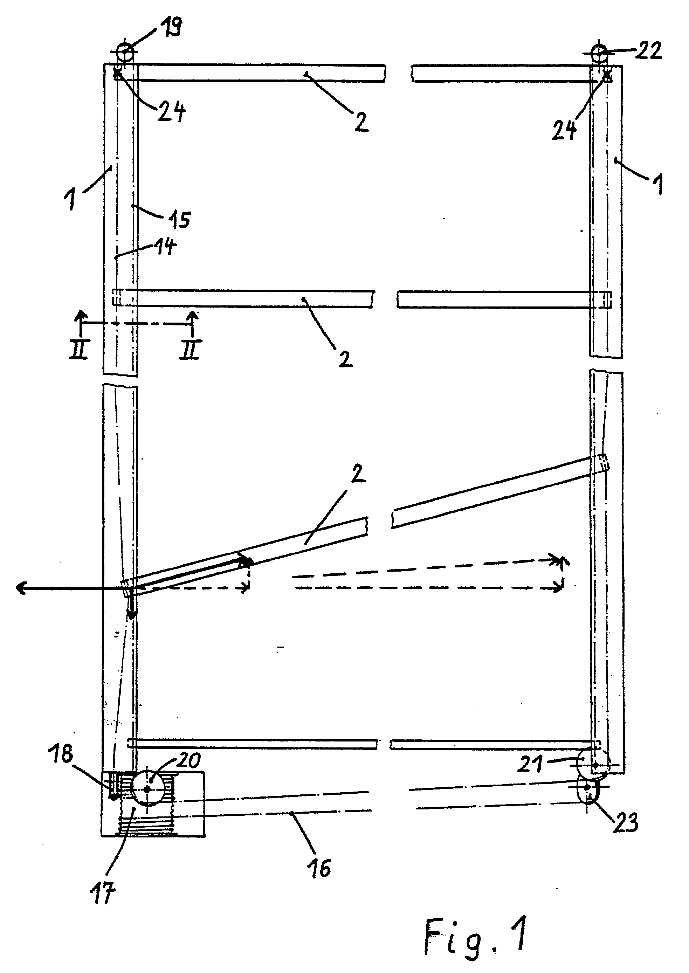

Durch die Vierkantrohrabschnitte 11 führt der eine Trum 14 und durch die Gleitschiene 8 der andere Trum 15 eines in Fig. 1 im ganzen dargestellten Zugseiles 16.

Das Zugseil 16 führt von einer an der Führerhausseite der Ladefläche angeordneten, mit einem Druckluftmotor getriebenen Haspel 17 nach oben zu einer Umlenkrolle 18, von dieser als der Trum 14 zu einer Umlenkrolle 19, von dieser als der Trum 15 zu einer Umlenkrolle 20 durch die andere Führung 1 hindurch und schließlich über eine Umlenkrolle 23 nach unten zurück zur Haspel 17.

Befestigt an dem Zugseil 16 ist nur der vordere Spriegel 2 an den angekreuzten Punkten 24.

Die Spriegel sind untereinander verbunden durch Befestigung an der Plane des Schiebeverdecks, z.B. mittels Schnallen. Gezeichnet sind nur drei Spriegel; tatsächlich sind so viele Spriegel vorhanden, daß in der auseinandergezogenen Stellung beispielsweise alle 60 bis 80 cm ein Spriegel steht.

Die Plane mag im vorliegenden Beispielsfall nur eine Staubplane sein, die sich lediglich auf dem freien Abschnitt der Spriegel zwischen den Führungen 1 erstreckt. Für eine an der Seiten heruntergewinkelte Plane würde man dem waagerechten Schenkel 4 des U-Profils nur einen geringeren Abstand über den Spriegeln geben und dazu die Sicherungsschiene 9 flacher und die Achse 12 mit der oberen Anschlagrolle 13 kürzer ausführen.

Wird durch entsprechenden Zug der Haspel 17 an dem Zugseil 16 der vordere Spriegel 2 zurückgezogen, beginnt das Verdeck sich vorne zu falten. Stößt der vordere Spriegel an den nächsten Spriegel an, nimmt er diesen mit usf., bis alle Spriegel zusammengeschoben sind und das Schiebeverdeck zurückgeschoben ist.

Wird, umgekehrt, das Schiebeverdeck aufgezogen, verschiebt sich zuerst nur der vordere Spriegel und werden dann schrittweise die anderen Spriegel durch die Plane mitgenommen.

Sollte dabei einer der Spriegel an einer Seite einen Widerstand erhalten, wird er, wobei das Schiebeverdeck sich verzieht, an der anderen Seite weitergezogen und stellt sich schräg. Legen sich dann an beiden Enden des Spriegels die Anschlagrollen 13 an die Gleitschiene 8 und die Sicherungsschiene 9 an, so entsteht aus der Kraft des Widerstandes bzw. aus der von der Plane auf den Bügel ausgeübten Kraft eine Anpreßkraft der Anschlagrollen 13 an der Gleitschiene 8 und der Sicherungsschiene 9, die den Widerstand bzw. die Verklemmung noch verstärkt. Diese ist aber, wie aus dem in Fig. 1 eingezeichneten Vektordiagramm ersichtlich, um so geringer, je schräger der Bügel steht.

Das im Ausführungsbeispiel vorgesehene seitliche Spiel der Spriegel 2 von insgesamt 3 bis 4 cm erlaubt den Spriegeln eine verhältnismäßig schräge Lage.

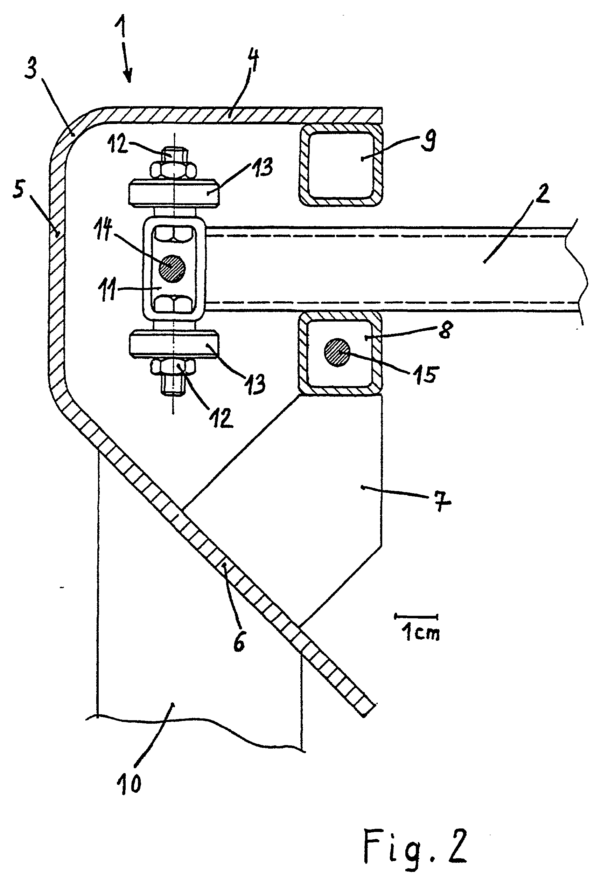

Man könnte die Spriegel 2 auch teleskopisch gestalten. Fig. 2 könnte so, wie dargestellt, auch zu einem solchen Ausführungsbeispiel gehören.

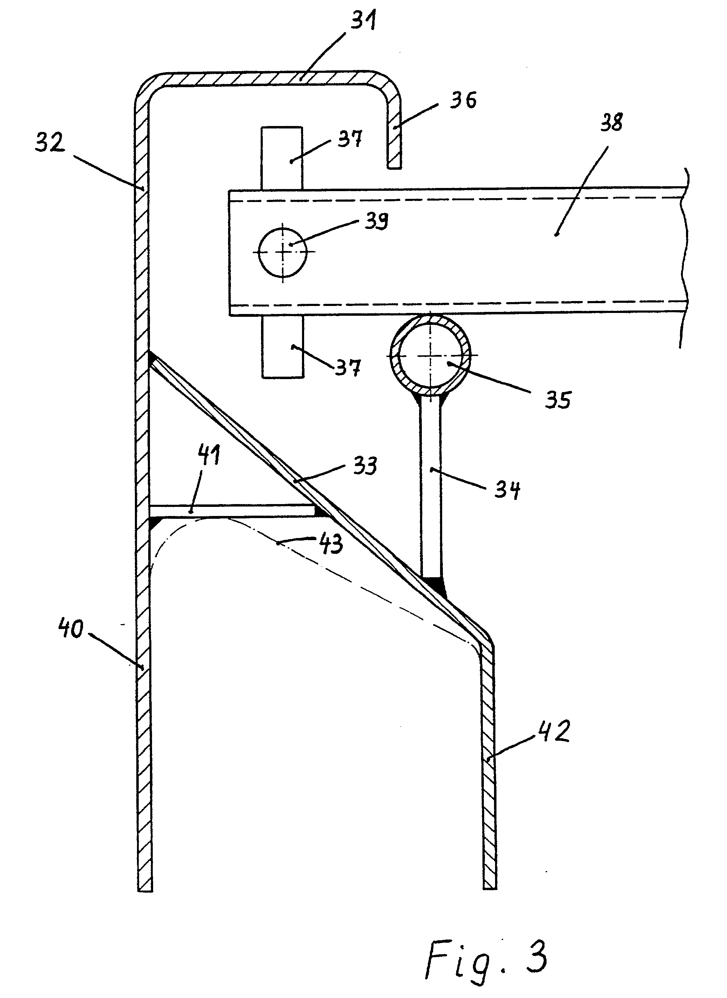

Fig. 3 stellt eine Abwandlung dar, in der die Führungen gleichfalls durch ein U-Profil mit einem waagerechten oberen Schenkel 31, einem senkrechten Rücken 32 und einem schrägen unteren Schenkel 33 gebildet sind, der auf Stützen 34 eine rohrförmige Gleitschiene 35 trägt. Als Sicherungsschiene dient aber eine bloße Abkantung 36, und statt der Anschlagrollen sind lediglich zwei runde Stifte 37 an der Oberseite und der Unterseite des hier mit 38 bezeichneten Spriegels angeschweißt.

Die Stifte 37 fluchten miteinander. Desgleichen fluchtet die diesen zugekehrte Oberfläche der Abkantung 36 mit der betreffenden äußeren Mantellinie der im Querschnitt kreisförmigen Gleitschiene 35.

Ein Durchlaß 39 in dem Spriegel 38 dient wiederum der Hindurchführung eines Zugseils, dessen anderer Trum durch die Gleitschiene 35 läuft.

Mit einer Verlängerung 40 des Rückens 32 des U-Profils, einer Querstrebe 41 und einer Abwinkelung 42 des schrägen Schenkels 33 sitzt die Führung auf einem strichpunktiert angedeuteten oberen Längsbalken 43 eines die Ladefläche eingrenzenden Gestelles.

Im übrigen gilt das gleiche, wie zu Fig. 1 und 2 ausgeführt.

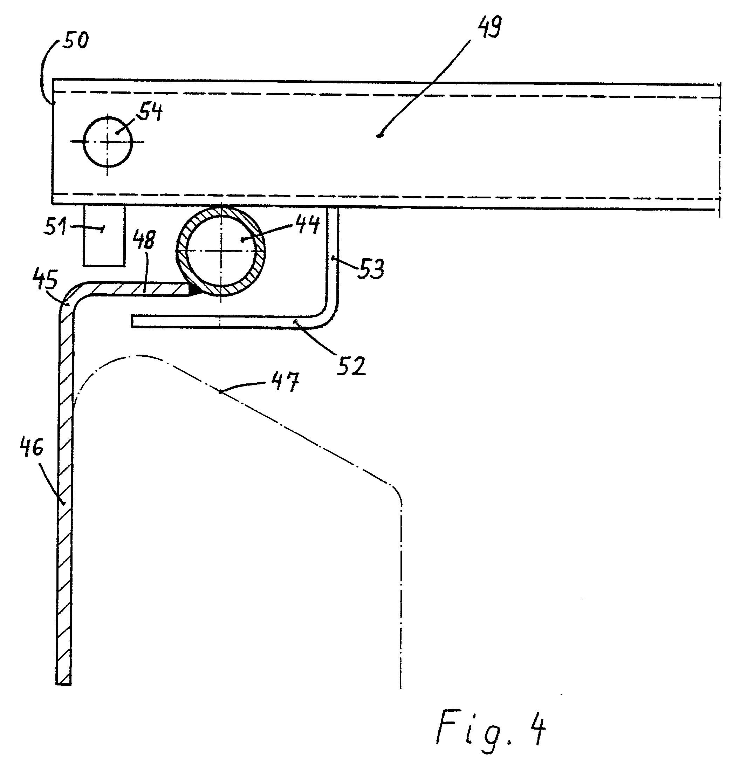

Fig. 4 zeigt als weitere Abwandlung eine Führung, die durch ein mit einer, wiederum rohrförmigen, runden Gleitschiene 44 versehenes Winkelprofil 45 gebildet ist. Das Winkelprofil 45 ist mit einem senkrechten Schenkel 46 an einem auch hier strichpunktiert angedeuteten oberen Längsbalken 47 einer seitlichen Begrenzung der Ladefläche befestigt. Am von dem senkrechten Schenkel 46 nach innen abgewinkelten waagerechten Schenkel 48 ist die Gleitschiene derart an der Kante angeschweißt, daß ihre untere Mantellinie mit der Unterseite des waagerechten Schenkels 48 fluchtet; mit dem größten Teil ihres Durchmessers steht die Gleitschiene 44 also über den waagerechten Schenkel 48 nach oben über.

Hier überdeckt der auf der Gleitschiene 44 liegende, mit 49 bezeichnete Spriegel in der dargestellten Normalstellung die Führung, derart, daß seine Stirnseite 50 mit der Außenseite des senkrechten Schenkels 46 fluchtet. Die von den Spriegeln getragene Plane kann somit seitlich nach unten herumgewinkelt werden.

Als Anschläge sind nahe den Enden an der Unterseite des Spriegels runde Stifte 51 angeschweißt. Ferner sind an der Unterseite des Spriegels Sicherungshaken 52 befestigt. Diese reichen mit einem freien Abstand so weit unter den waagerechten Schenkel 48, daß sie diesen oder wenigstens die Gleitschiene 44 noch untergreifen, wenn der Stift 51 an der Seite der Gleitschiene 44 anliegt. Der freie Abstand zwischen dem senkrechten Schenkel 53 des Sicherungshakens 52 und der Gleitschiene 44 ist in der dargestellten Normalstellung größer als der freie Abstand zwischen dem Stift 51 und der Gleitschiene 44, so daß bei einer Längsverschiebung des Spriegels auf der einen Seite der Stift 51 an der Gleitschiene 44 anstößt, bevor auf der anderen Seite der senkrechte Schenkel 53 anstossen kann.

Auch hier ist ein, mit 54 bezeichneter, Durchlaß für den zu Fig. 3 beschriebenen Zweck vorhanden.

Im übrigen gilt die Beschreibung zu Fig. 1 und 2 auch für Fig.4.

**Patentansprüche**

1. Schiebeverdeckgestell für Lastkraftwagen, das eine Anzahl von Spriegeln aufweist, die an zwei an den beiden Seiten verlaufenden Führungen auf Gleitschienen (8; 35; 44) verschiebbar abgestützt sind und durch seitliche, mit mindestens ½ cm Zwischenraum gegen die Führung gerichtete Anschläge gesichert sind, dadurch gekennzeichnet, daß die Anschläge von außen nach innen gerichtet sind und die Spriegel (2; 38; 49) lose, mit Spiel in dem Zwischenraum aufliegen.

2. Schiebeverdeckgestell nach Anspruch 1, dadurch gekennzeicht, daß das Spiel mehr als 1 cm, vorzugsweise mehr als 2 cm, beträgt.

3. Schiebeverdeckgestell nach Anspruch 1 oder 2, dadurch gekennzeicht, daß die Anschläge (13; 37; 51) gegen die Gleitschienen (8; 35; 44) gerichtet sind.

4. Schiebeverdeckgestell nach einem der Ansprüche 1 bis 3, dadurch gekennzeichnet, daß die Anschläge Anschlagrollen (13) sind.

5. Schiebeverdeckgestell nach einem der Ansprüche 1 bis 3, dadurch gekennzeichnet, daß die Anschläge gleitende Anschläge (37; 51) sind, vorzugsweise in Form an den Spriegeln (2; 38; 49) abstehender Vorsprünge, vorzugsweise runder Stifte (37; 51).

6. Schiebeverdeckgestell nach einem der Ansprüche 1 bis 5, dadurch gekennzeichnet, daß die Spriegel gerade oder leicht giebelförmig gewinkelte oder gebogene Stangen (2; 38; 49), vorzugsweise aus flachem Vierkantrohr, sind.

7. Schiebeverdeckgestell nach einem der Ansprüche 1 bis 6, dadurch gekennzeichnet, daß über den Gleitschienen (8; 35) jeweils eine Sicherungsschiene (9; 36) angeordnet ist.

8. Schiebeverdeckgestell nach einem der Ansprüche 1 bis 6, dadurch gekennzeichnet, daß die Spriegel (49) mit Sicherungshaken (52) unter die Gleitschienen (44) greifen.

9. Schiebeverdeckgestell nach Anspruch 7, dadurch gekennzeichnet, daß die Spriegel (2; 38) seitliche Anschläge (13; 37) gegen die Sicherungsschienen (9; 36) aufweisen.

10. Schiebeverdeckgestell nach Anspruch 4, 6, 7 und 9, dadurch gekennzeichnet, daß die Gleitschienen (8) und die Sicherungsschienen (9) aus Vierkantrohr bestehen und ihre äußeren Seitenflächen die Gegenflächen für jeweils in Flucht miteinander an den Enden der Spriegel (1) an geordnete Anschlagrollen (13) bilden.

11. Schiebeverdeckgestell nach einem der Ansprüche 1 bis 10, dadurch gekennzeichnet, daß die beiden Führungen durch die Spriegelenden einfassende U-Profile gebildet sind, die jeweils einen waagerechten oberen Schenkel (4; 31), an dem ggf. die Sicherungsschiene (9; 36) angeordnet ist, einen senkrechten Rücken (5; 32) und einen schrägen unteren Schenkel (6; 33) aufweisen, auf dem die Gleitschiene (8; 35) über Konsolen (7) oder Stützen (34) abgestützt ist.

12. Schiebeverdeckgestell nach Anspruch 8, dadurch gekennzeichnet, daß die beiden Führungen durch von den Spriegelenden überdeckte Winkelprofile (45) gebildet sind, an deren einen, nach innen gerichteten Schenkeln (49) die Gleitschienen (44), nach oben überstehend und vorzugsweise unten bündig, sitzen.

13. Schiebeverdeckgestell nach einem der Ansprüche 1 bis 12, dadurch gekennzeichnet, daß ein Zugseil (16) mit einem Trum (14) durch Durchlässe (11; 39; 44) an den Enden der Spriegel (2; 38; 49), vorzugsweise ferner mit einem anderen Trum (15) durch die, rohrförmigen, Gleitschienen (8; 35; 44) oder Sicherungsschienen, geführt ist und der erste Spriegel (2; 38; 49) an dem Zugseil (16) und die übrigen Spriegel (2; 38; 49) an der Plane des Schiebeverdecks befestigt ist bzw. sind.

**Claims**

1. A sliding roof frame for a lorry, which comprises a number of supports, which are displaceably supported on two guides on guide bars (8; 35; 44) extending on both sides and are secured by lateral stops directed towards the guide with a space of at least ½ cm, characterised in that the stops are inwardly directed and the supports (2; 38; 49) are loosely supported with clearance in the space.

2. A sliding roof frame according to Claim 1, characterised in that the clearance is more than 1 cm, preferably more than 2 cm.

3. A sliding roof frame according to Claim 1 or 2, characterised in that the stops (13; 37, 51) are directed towards the guide bars (8; 35; 44).

4. A sliding roof frame according to one of Claims 1 to 3, characterised in that the stops are tappet rollers (13).

5. A sliding roof frame according to one of Claims 1 to 3, characterised in that the stops are sliding stops (37; 51), preferably in the form of bosses, preferably round pins (37; 51), projecting from the supports (2; 38; 49).

6. A sliding roof frame according to one of Claims 1 to 5, characterised in that the supports are bars (2; 38; 49) which are straight or slightly bent or angled in a gable shape, preferably made from flat square tube.

7. A sliding roof frame according to one of Claims 1 to 6, characterised in that a retaining bar (9; 36) is disposed over each guide bar (8; 35).

8. A sliding roof frame according to one of Claims 1 to 6, characterised in that the supports (49) engage with retaining hooks (52) under the guide bars (44).

9. A sliding roof frame according to Claims 7, characterised in that the supports (2; 38) have lateral stops (13; 37) towards the retaining bars (9; 36).

10. A sliding roof frame according to Claim 4, 6, 7 and 9, characterised in that the guide bars (8) and the retaining bars (9) are made from square tube and their outer lateral surfaces form the countersurfaces for tappet rollers (13) disposed in alignment with one another on the ends of the supports (1).

11. A sliding roof frame according to one of Claims 1 to 10, characterised in that the two guides are formed by U sections enclosing the support ends, which comprise a horizontal upper flange (4; 31), on which the retaining bar (9; 36) is disposed if required, a perpendicular back piece (5; 32) and an inclined lower flange (6; 33), on which the guide bar (8; 35) is supported by means of brackets (7) or uprights (34).

12. A sliding roof frame according to Claim 8, characterised in that the two guides are formed by angle sections (45) covered by the support ends, on one inwardly directed flange (49) of which the guide bars (44) are seated, with said guide bars protruding in the upward direction and being preferably flush at the bottom.

13. A sliding roof frame according to one of Claims 1 to 12, characterised in that a traction rope (16) is guided with one strand (14) through apertures (11; 39; 44) on the ends of the supports (2; 38; 49), and preferably with another strand through the tubular guide bars (8; 35; 44) or retaining bars, and the first support (2; 38; 49) is fastened to the traction rope (16) and the remaining supports (2; 38; 49) are fastened to the cover of the sliding roof.

**Revendications**

1. Cadre de toit coulissant pour caminos, comportant une pluralité d'arceaux qui prennent appui de manière coulissable via deux guides s'étendant des deux côtés, sur des rails de glissement (8; 35; 44) et qui sont arrêtés latéralement par de butées orientées vers le guide, avec un interstice d'au moins ½ cm, caractérisé en ce que les butées sont orientées de l'extérieur vers l'intérieur et en ce que les arceaux (2, 38; 49) prennent librement appui sur les rails et ont du jeu dans l'interstice.

2. Cadre de toit coulissant selon la revendication 1 caractérisé en ce que le jeu est de plus de 1 cm, de préférence de plus de 2 cm.

3. Cadre de toit coulissant selon la revendication 1 ou 2 caractérisé en ce que les butées (13, 37; 51) sont orientées vers les rails de glissement (8; 35; 44).

4. Cadre de toit coulissant selon l'une quelconque des revendications 1 à 3 caractérisé en ce que les butées consistent en des galets de butée (13).

5. Cadre de toit coulissant selon l'une quelconque des revendications 1 à 3 caractérisé en ce que les butées consistent en des butées coulissantes (37; 51), de préférence sous forme d'éléments en saillie sur les arceaux (2; 38; 49), de préférence des broches rondes (37; 51).

6. Cadre de toit coulissant selon l'une quelconque des revendications 1 à 5 caractérisé en ce que les arceaux sont des tiges droites ou légèrement pliées ou coudées à la manière d'un pignon (2; 38; 49), de préférence en un tube rectangulaire.

7. Cadre de toit coulissant selon l'une quelconque des revendications 1 à 6 caractérisé en ce qu'un rail d'arrêt (9; 36) est chaque fois agencé au-dessus des rails de glissement (8; 35).

8. Cadre de toit coulissant selon l'une quelconque des revendications 1 à 6 caractérisé en ce que les arceaux (49) s'étendent par des crochets d'arrêt (52) en dessous des rails de glissement (44).

9. Cadre de toit coulissant selon la revendication 7 caractérisé en ce que les arceaux (2; 38) comportent des butées latérales (13, 17) contre les rails d'arrêt (9; 36).

10. Cadre de toit coulissant selon les revendications 4, 6, 7 et 9 caractérisé en ce que les rails de glissement (8) et les rails d'arrêt (9) consistent en des tubes rectangulaires et en ce que leur face latérale extérieure constitue chaque fois la face d'arrêt pour les galets de butée (13) agencés dans l'alignement l'un par rapport à l'autre, aux extrémités des arceaux (1).

11. Cadre de toit coulissant selon l'une quelconque des revendications 1 à 10 caractérisé en ce que les deux guides sont constitués par des profilés en U enveloppant les extrémités des arceaux, qui présentent chacun une branche supérieure horizontale (4; 31) à laquelle est éventulelement agencé le rail d'arrêt (9; 36), un dos vertical (5; 32) et une branche inférieure inclinée (6; 33) sur laquelle repose le rail le glissement (8; 35) via des consoles (7) ou des appuis (34).

12. Cadre de toit coulissant selon la revendication 8 caractérisé en ce que les deux guides sont formés par des cornières (45) reconvertes par les extrémités des arceaux, dont l'une des branches, orientée vers l'intérieur (49) porte le rail de glissement (44) à fleur à sa partie inférieure et faisant saillie vers le haut.

13. Cadre de toit coulissant selon l'une quelconque des revendications 1 à 12 caractérisé en ce qu'un câble de traction (16) est mené par un brin (14) à travers des passages (11; 39; 44) aux extrémités des argeaux (2; 38; 49), de préférence encore par un autre brin (15) à travers les rails de glissement tubulaires (8; 35; 44) ou d'arrêt, et en ce que le premier arceau (2; 38; 49) est attaché au câble de traction (16) et les autres arceaux (2; 35; 49) à la bâche du toit coulissant.

Fig.1

Fig. 2

Fig. 3

Fig. 4